Europäisches Patentamt

(19) European Patent Office

Office européen des brevets

(11) Veröffentlichungsnummer: **0 061 086**
A1

(12) **EUROPÄISCHE PATENTANMELDUNG**

(21) Anmeldenummer: 82101990.8

(22) Anmeldetag: 12.03.82

(51) Int. Cl.³: **B 23 F 19/02**
**B 23 Q 11/00**

(30) Priorität: 23.03.81 CH 1930/81

(43) Veröffentlichungstag der Anmeldung:
29.09.82 Patentblatt 82/39

(84) Benannte Vertragsstaaten:
CH DE FR GB IT LI SE

(71) Anmelder: Werkzeugmaschinenfabrik Oerlikon-Bührle
AG
Birchstrasse 155
CH-8050 Zürich(CH)

(72) Erfinder: Konersmann, Erhard
Grundackerstrasse 3
D-8304 Wallisellen(DE)

(72) Erfinder: Kotthaus, Erich
Schmittenackerstrasse 18
D-8304 Wallisellen(DE)

(54) Spindeleinsatz.

(57) Zur Verbesserung des Laufverhaltens von geläppten Zahnrädern wird in die Bremsspindel einer Läppmaschine ein Spindeleinsatz eingesetzt. Bei diesem ist eine Einsatzspindel (10) beweglich gegenüber der Spindel (1) gelagert und über ein elastisches Element (19) damit verbunden.

FIG. 1

Croydon Printing Company Ltd.

## Spindeleinsatz

Die Erfindung bezieht sich auf einen Spindeleinsatz für eine Spindel einer Zahnradläppmaschine.

Zur Verbesserung des Tragbildes der Zähne eines Zahnradpaares können die Zahnflanken geschliffen oder geläppt werden. Beim Läppen werden die beiden Räder eines Zahnradpaares unter Zugabe von Läppmittel im Eingriff miteinander bewegt, wobei vom einen Rad zum andern ein Drehmoment übertragen wird. Zusatzbewegungen eines Rades gegenüber dem anderen, erlauben dabei, die Läppzone zu verschieben und so das Tragbild zu beeinflussen. Aus der deutschen Auslegeschrift 2 328 800 ist eine Maschine zum Läppen von Zahnrädern bekannt, die eine Spindel in üblicher Ausführungsform aufweist. Diese ist an ihrem einen Ende mit einem Innenkonus versehen, in den eine Werkstückspannvorrichtung eingesetzt werden kann. Das andere Ende der Spindel ist mit einer Antriebsvorrichtung, beispielsweise einer Riemenscheibe oder einem Kettenrad, zum Antreiben eines Bremsmotors, versehen.

Werden an die Laufruhe eines Zahnradpaares besonders hohe Anforderungen gestellt, so können diese durch Läppen auf bekannten Maschinen, insbesondere bei hoher Läppleistung, nicht mehr erfüllt werden.

Die Erfindung, wie sie in den Ansprüchen gekennzeichnet ist, löst die Aufgabe, eine Vorrichtung zu schaffen, mit der beim Läppen von Zahnradpaaren auf einer Zahnradläppmaschine hohe Anforderungen an das Laufverhalten des Zahnradpaares erfüllt werden können. Die durch die Erfindung erreichten Vorteile sind insbesondere darin zu sehen, dass ein stark verbessertes Laufverhalten der Zahnräder im Einsatz, auch nach dem Läppen mit hoher Läppleistung und somit stark reduzierten Läppzeiten, mög-

0061086

lich ist.

Im Folgenden wird die Erfindung anhand von Zeichnungen, welche einen Ausführungsweg darstellen, näher erläutert.

Figur 1 zeigt einen Längsschnitt durch eine Spindel einer Zahnradläppmaschine mit einem Spindeleinsatz.

Figur 2 zeigt eine Ansicht eines Spindeleinsatzes.

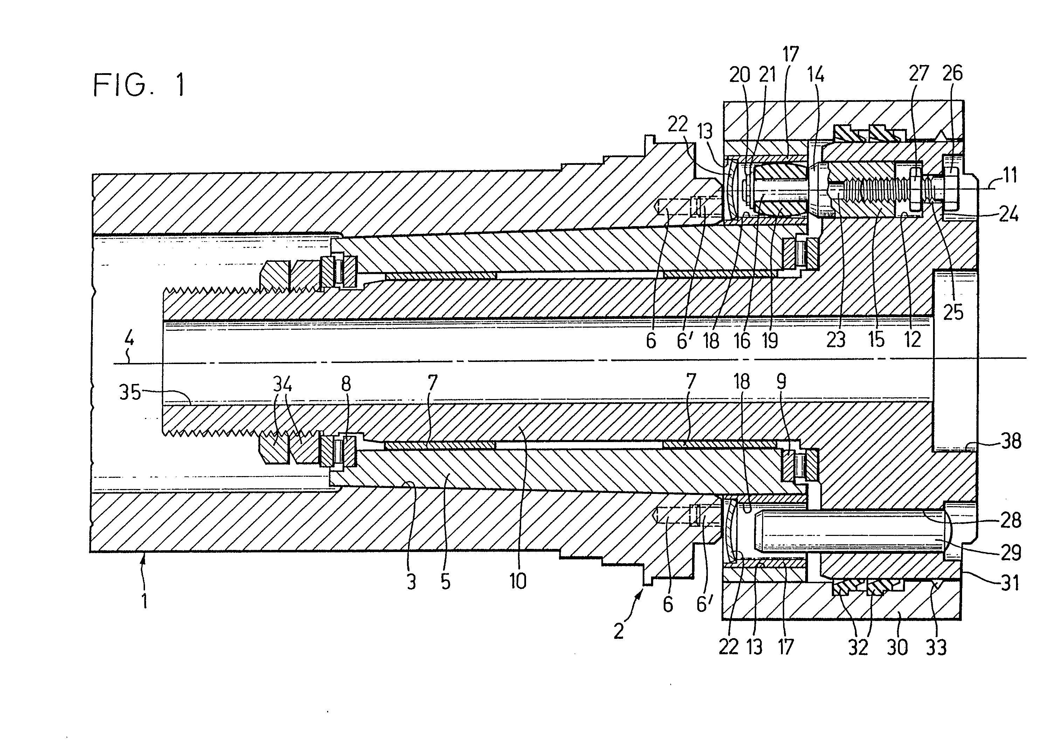

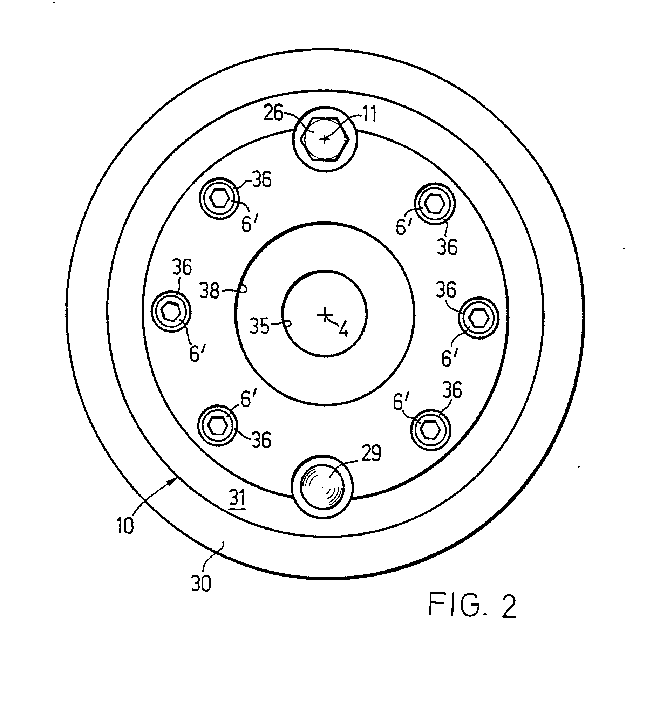

In Fig. 1 ist eine Spindel 1 einer Zahnradläppmaschine erkennbar, die an ihrem vorderen Ende 2 einen Innenkonus 3 aufweist. Die Spindel 1 ist in bekannter, hier nicht näher dargestellter Art in der Läppmaschine um eine Spindelachse 4 drehbar gelagert. In den Innenkonus 3 ist ein Ringeinsatz 5 eingeschoben, und mit Schrauben 6 (Fig. 2) in gestrichelt angedeuteten Gewindelöchern 6 festgeschraubt. In den Ringeinsatz 5 ist um die Spindelachse 4 drehbar und mittels Gleitlager 7 und Wälzlager 8 und 9 gelagert, eine Einsatzspindel 10 eingesetzt. Diese weist ein wesentlich geringeres Massenträgheitsmoment auf, als die Spindel 1, in der sie gelagert ist. Das Wälzlager 8 ist dabei durch Schraubringe 34, die auf der Einsatzspindel 10 aufgeschraubt und gesichert sind, befestigt.

Parallel zur Spindelachse 4 sind zu einer Achse 11 je koaxiale Bohrungen 12 und 13 in der Einsatzspindel 10, sowie im Ringeinsatz 5 vorgesehen. Ein Bolzen 14 erstreckt sich in beide Bohrungen 12 und 13 hinein.
Ein Abschnitt 15 des Bolzens 14 weist den gleichen Aussendurchmesser auf, wie die Bohrung 12. Ein Abschnitt 16 weist einen wesentlich kleineren Durchmesser auf, als die Bohrung 13.

In die Bohrung 13 ist eine Hülse 17 eingesetzt, deren Innenfläche 18 leicht konisch ausgebildet ist. Zwischen dem

Abschnitt 16 des Bolzens 14 und der Innenfläche 18 der Hülse 17 ist als elastisches Element ein elastischer Ringkörper 19 angeordnet, der auf dem Abschnitt 16 des Bolzens 14 mit einem Sprengring 20 und einer Scheibe 21 befestigt ist. Eine Abdeckscheibe 22 schützt diese Elemente gegen Verschmutzung.

Der Abschnitt 15 des Bolzens 14 weist eine Gewindebohrung 23 auf, die konzentrisch zur Achse 11 verläuft. Die Bohrung 12 wird auf dem der Bohrung 13 abgekehrten Ende durch einen Steg 24 begrenzt, der wiederum koaxial zur Achse 11 eine Durchgangsbohrung 25 für eine Schraube 26 aufweist. Mit der Schraube 26 fest verbunden ist in der Bohrung 12 eine Mutter 27 vorgesehen.

Der Ringeinsatz 5 weist eine weitere gleich ausgeführte Bohrung 13 in Figur 1 unten mit einer Hülse 17 auf. Zu dieser verläuft koaxial in der Einsatzspindel 5 eine weitere Bohrung 28, in der ein Bolzen 29 festgemacht ist, der bis in die Bohrung 13 hineinreicht, aber einen Durchmesser aufweist, der kleiner ist, als der Durchmesser der Innenfläche 18 der Hülse 17.

Ein Ring 30 umfasst aussen den Ringeinsatz 5 und erstreckt sich über diesen hinaus bis an eine Stirnfläche 31 der Einsatzspindel 10. Zwischen Einsatzspindel 10 und Ring 30 sind in bekannter Weise Lippendichtungen 32 und Labyrinthdichtungen 33 vorgesehen, zum Schutz gegen Verschmutzung.

In Figur 2 erkennt man den Ring 30, die Einsatzspindel 10 mit einer durchgehenden Bohrung 35 sowie den Bolzen 29 und die Schraube 26. Durchgangsbohrungen 36 in der Einsatzspindel 10 gestatten das nicht näher dargestellte Festmachen bzw. Lösen des Ringeinsatzes 5 mittels in die Gewindelöcher 6 in der Spindel 1 eingreifende Schrauben 6 .

Auf die Einsatzspindel 10 wird in bekannter Art eine Aufspannvorrichtung zum Festhalten eines zu läppenden Zahnrades aufgesetzt. Zur Zentrierung dieser Aufspannvorrichtung ist eine ringförmige Ausnehmung 38 vorgesehen.

Beim Läppen eines Zahnrades kann sich nun die in Drehrichtung über das elastische Element (hier Ringkörper 19) gelagerte Einsatzspindel 10 infolge ihres wesentlich geringeren Massenträgheitsmomentes den durch das Kämmen der beiden Zahnräder hervorgerufenen Schwingungen wesentlich besser anpassen.

Durch Drehen der Schraube 26 kann der Bolzen 14 mit dem Ringkörper 19 mehr oder weniger weit in die Hülse 17 hineingeschoben werden, so dass der Ringkörper 19 durch die konische Innenfläche 18 mehr oder weniger stark zusammengedrückt wird. So kann die Elastizität des elastischen Elements je nach der Masse des zu läppenden Zahnrades eingestellt werden.

Je nach Belastung und Abmessungen des Spindeleinsatzes kann es sinnvoll sein, an mehr als einer Stelle ein elastisches Element vorzusehen.

Vorzugweise wird der Spindeleinsatz in die Bremsspindel der Läppmaschine eingesetzt.

0061086

Patentansprüche

1. Spindeleinsatz für eine Spindel (1) einer Zahnradläppmaschine, gekennzeichnet durch eine in der Spindel (1) drehbar gelagerte Einsatzspindel (10) und
ein, die Spindel (1) und die Einsatzspindel (10) verbindendes elastisches Element.

2. Spindeleinsatz gemäss Anspruch 1, dadurch gekennzeichnet, dass ein Ringeinsatz (5) vorhanden ist, der
in der Spindel (1) befestigt, und in dem die Einsatzspindel (10) gelagert ist.

3. Spindeleinsatz gemäss Anspruch 1, dadurch gekennzeichnet, dass das elastische Element aus einem Ringkörper (19) besteht.

4. Spindeleinsatz gemäss Anspruch 2 und 3, dadurch gekennzeichnet, dass der Ringkörper (19) auf einem Bolzen (14) auf der Einsatzspindel (10) angeordnet ist
und sich in eine Hülse (17) im Ringeinsatz (5) erstreckt.

5. Spindeleinsatz gemäss Anspruch 2, dadurch gekennzeichnet, dass der Ringeinsatz (5) in einem Innenkonus (3) der Spindel (1) befestigt ist.

6. Spindeleinsatz gemäss Anspruch 1, dadurch gekennzeichnet, dass die Einsatzspindel (10) eine axiale
Bohrung (35) aufweist.

7. Spindeleinsatz gemäss Anspruch 4, dadurch gekennzeichnet, dass die Hülse (17) eine konische Innenfläche
(18) aufweist.

FIG. 1

0061086

-1/2-

FIG. 2

# 0061086

## EUROPÄISCHER RECHERCHENBERICHT

Europäisches
Patentamt

EP 82 10 1990

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 190 559 (GLEASON) | 1 | B 23 F 19/02 |
| | | | B 23 Q 11/00 |
| | --- | | |
| A | CH-A- 411 527 (KLINGELNBERG) | 1 | |
| | --- | | |
| A | US-A-2 381 488 (COULSON) | 1 | |
| | --- | | |
| A | US-A-2 596 821 (PARKINS) | 1 | |
| | --- | | |
| A | FR-A-1 406 868 (HULLER) | 1 | |
| | --- | | |
| A | GB-A- 425 539 (BADCOCK) | 1 | |
| | --- | | |
| A | DE-C- 915 291 (HEIDENREICH) | 1 | |
| | ----- | | |

**RECHERCHIERTE SACHGEBIETE (Int. Cl. 3)**

B 23 D 77/00
B 23 F 19/00
B 23 F 23/00
B 23 Q 1/00
B 23 Q 11/00

Der vorliegende Recherchenbericht wurde für alle Patentansprüche erstellt.

| Recherchenort | Abschlußdatum der Recherche | Prüfer |
|---|---|---|
| DEN HAAG | 21-06-1982 | HORVATH R.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82